# EUROPEAN PATENT SPECIFICATION

(11) **EP 4 399 444 B1**
(45) Date of publication and mention of the grant of the patent: **06.05.2026**
(21) Application number: 21801471.0
(22) Date of filing: 26.10.2021
(51) Int. Cl.: F21S 43/14, F21S 43/236, F21S 43/237, F21S 43/239, F21S 43/241, F21S 43/243, F21S 43/249, F21S 43/20, F21S 43/31, F21S 43/27, B60Q 1/26

(54) **VEHICLE LIGHT AND VEHICLE COMPRISING THE VEHICLE LIGHT**
FAHRZEUGLEUCHTE UND FAHRZEUG MIT SOLCH EINER FAHRZEUGLEUCHTE
DISOISITIF DE LUMIERE ET VEHICULE AVEC UN TEL DISPOSITIF

(43) Date of publication of application: 17.07.2024
(73) Proprietor: Wuhan Lotus Cars Co., Ltd., Wuhan, Hubei (CN)
(72) Inventor: GROSS, Martin, 65479 Raunheim (DE); LANGKABEL, Frank, 65479 Raunheim (DE); HABERKORN, Rouven, 65479 Raunheim (DE); NDJEUNDOUN, Paul, 65479 Raunheim (DE)
(74) Representative: Elzaburu S.L.P.
(86) International application number: PCT/EP2021/079684
(87) International publication number: WO 2023/072374

(56) References cited:
- EP-A1- 0 768 491
- EP-A1- 3 572 723
- EP-B1- 2 047 307
- WO-A1-2021/136235
- CN-B- 112 240 536
- DE-A1- 2 820 113
- FR-A1- 2 918 439
- FR-A1- 2 966 223
- KR-B1- 101 295 825
- US-A1- 2008 278 962
- US-A1- 2012 057 362

## Description

The invention relates to vehicle light and a vehicle comprising that vehicle light.

Vehicles comprise light elements for lightening up darkness, to increase visibility and/or for communicating with further road users. For increasing visibility, for example, the vehicles may comprise daytime running lights. For communicating with further road users, the vehicles may comprise turn lights and/or stop lights.

From DE 10 2014205606 A1, it is known to provide a lamp with multiple laser diodes. The laser diodes couple in light into a light entrance surface of a light mixing rod. Mixed light exits the light mixing rod. That light is led into an optical element, which guides a portion of the light to a wavelength conversion device, which changes the color of the portion of the light. Thus, the lamp emits light rays with different colors.

FR 2 918 439 A1 discloses a light signaling device for a motor vehicle comprising at least a first light source and a second rear light source which are capable of being activated alternatively and each of which is capable of forming a longitudinal light signaling beam.

EP 3 572 723 A1 relates to a lighting tool for a vehicle with a first light source and a second light source.

From US 2012/057362 A1, a device for optional coupling of light into at least one light conductor in an illuminating element is known.

FR 2 966 223 A1 discloses a device with two light sources such as LEDs, wherein each LED is associated with an optical device.

WO 2021/136235 A1 relates to a light guide component, a lighting apparatus and a vehicle.

DE 28 20 113 A1 discloses a headlight-lamp unit with a diffuser body made of soft glasses.

From EP 0 768 491 A1, a multilayered lens for a lamp is known.

US 2008/278962 A1 discloses a light system for a vehicle headlight unit, the system comprising a light source (11),a lamp reflector (12) and a substantially rod-shaped transparent light guide (2), wherein the reflector (12) projects light from the light source (11) into the light guide (2), the light guide comprises a glass guide part (21)and a plastic guide part (22), and the glass guide part (21) extends between the light source (11)and the plastic part (22).

KR 101295825 B1 discloses a car color light guide application lamp using the light source tinged with the chromatics or irradiates with the mixing of the chromatics of light in the desired color by using the light guide etc. including the chromatics layer. The car color light guide application lamp comprises the light source irradiating the light of the first chromatics, and the light guide in which a part has the second chromatics. And the third color herbs generated by the mixing of the second chromatics and the first chromatics the light of the first chromatics passes through the light guide.

EP 2047307 A1 relates to an optical fiber system having a first optical fiber (LL1 ) and a second optical fiber (LL2), wherein the second optical fiber (LL2) is disposed downstream to the first optical fiber (LL1 ) in the light propagation direction, wherein the first optical fiber (LL1 ) is more temperature tolerant than the second optical fiber (LL2), and wherein the first optical fiber (LL1 ) and the second optical fiber (LL2) have at least one mutual absorption line in the infrared spectral region.

CN 112240536 A provides a light source device, a light guide and a method of manufacturing the light guide. The light guide includes a transparent tube (100) and a light guide medium (200) disposed within the transparent tube, the light guide medium including an adhesive material (210) and fluorescent powder (220), a distance between the adhesive material and the transparent tube being less than 780 nm. According to the invention, the bonding material and the transparent tube with similar refractive indexes are selected, and then the slurry containing the fluorescent powder and the bonding material is cured in the smooth transparent tube, so that the transparent tube can provide a smooth surface after the auxiliary light guide medium is formed, and the outer wall of the transparent tube isused as the side surface of the light guide. The surface of the light guide medium does not need to be polished, so that the preparation process of the light guide is simplified.

The technical object may be providing an improved vehicle light having a simple configuration and which provides an increased flexibility in light colors. The invention is set out in the appended set of claims.

In an aspect of the invention, a vehicle light comprising a first light source, a second light source, at least one optical element comprising a light exit surface, a first collimator surface and a second collimator surface, wherein the first light source is arranged on the first collimator surface such that the first light source emits first light rays through the first collimator surface, wherein a first optical path of the first light rays extends from the first collimator surface through the light exit surface, wherein the second light source is arranged on the second collimator surface such that the second light source emits second light rays through the second collimator surface, wherein a second optical path of the second light rays extends from the second collimator surface through the light exit surface, wherein the second optical path overlaps with the first optical path at the light exit surface and wherein, at the light exit surface, the second light rays have a different color than the first light rays.

The invention provides a vehicle light having an optical element with a light exit surface where light rays from at least two light sources overlap. Those light rays are the first light rays and the second light rays. The first light source and the second light source are arranged on a first collimator surface and a second collimator surface. The first collimator surface and the second collimator surface may for example be surfaces of the optical element or of a separate part or parts being arranged on the optical element. The first light source emits the first light rays through the first collimator surface. The second light source emits the second light rays through the second collimator surface. The first light rays being emitted by the first light source extend along the first optical path that extends from the first collimator surface to the light exit surface. The second light rays being emitted by the second light source extend along the second optical path that extends from the second collimator surface to the light exit surface. At the light exit surface, the first optical path and the second optical path overlap. Furthermore, the second light rays have a different color than the first light rays at the light exit surface. Therefore, if both light sources emit light into their corresponding collimator surfaces, the light rays exiting the light exit surface have a mixed color of the first light rays and the second light rays. The resulting color may for example changed by different intensities of the first light rays and/or the second light rays. Thus, the invention provides a vehicle light that may provide at least three different colors with at least two light sources: Light having the color of the first light rays, light having the color of the second light rays and light having the mixed color of both, the first light rays and the second light rays. This increases the flexibility in providing different light colors, since with for example only to differently colored light rays, at least three colors may be provided. Furthermore, the vehicle light has a simple configuration that is easy to install.

In an example, the at least one optical element may comprise a double reflective element being arranged in the second optical path.

The use of a double reflective element in the second optical path results in a flexible positioning of the second light source and the second collimator surface in relation to the optical element. This further improves the flexibility of the vehicle light.

In a further example, the double reflective element may comprise two reflective surfaces in a periscope arrangement.

The periscope arrangement of the two reflective surfaces is easy to implement. Furthermore, the periscope arrangement the vehicle light may also meet spatial constraints in existing designs of vehicle lights. Thus, the vehicle light may be installed in existing vehicle designs.

For example, the first light source may be configured to emit white light, wherein the first light source preferably may be a white light emitting diode.

The vehicle light may use the white light as daytime running light.

In another example, the second light source may be configured to emit monochromatic light, wherein the second light source may preferably be a monochromatic light emitting diode.

In that example, the first light source may emit white light or monochromatic light of another color than the second light source. The use of a second light source emitting monochromatic light results in a simple provisioning of colored second light rays at the light exit surface.

Alternatively, the second light source may for example be configured to emit white light, wherein the second light source may preferably be a white light emitting diode.

In that example, the color of the second light rays of the second light source may be changed to any color before the second light rays arrive at the light exit surface. Furthermore, the intensity of white light emitting diodes is higher than the intensity of monochromatic light emitting diodes.

According to the invention, the at least one optical element further comprises at least one colored portion being arranged in the second optical path between the light exit surface and the second collimator surface, and is configured to change the color of collimated light of the second light source (14) and the at least one colored portion (34) comprises the second collimator surface (22), so that the light radiating from the second light source (14) through the collimator surface (22) immediately enter the colored portion.

In that example, the color of the light from the second light source changes when the light radiates through the colored portion of the at least one optical element. This provides a stable color change of the light from the second light source.

In an example, the at least one colored portion may be a separate part being attached to the at least one optical element.

The attachment of the separate part as colored portion provides an easy installation of the at least one optical element. Furthermore, the separate part may be replaceable if another color shall be provided for the second light rays at the light exit surface. In addition, a repair of a damaged optical element or a damaged separate part of the optical element is simplified.

In another example, the at least one colored portion may be an inseparable part of to the at least one optical element.

The at least one optical element with the inseparable part as colored portion may for example be manufactured by a bi-color mold injection method. Thus, the at least one optical element with the colored portion may be manufactured in one-step. This further simplifies the manufacturing of the vehicle light.

In another aspect of the invention, a vehicle is provided, the vehicle comprising at least one vehicle light according to above description, a front end and a rear end wherein at least one vehicle light is attached to the front end and/or the rear end.

The effects and further embodiments of the vehicle according to the present invention are analogous to the effects and embodiments of the vehicle light according to the description mentioned above. Thus, it is referred to the above description of the vehicle light.

Further features, details and advantages of the invention result from the wording of the claims as well as from the following description of exemplary embodiments based on the drawings. The figures show:
Fig. 1 a schematic drawing of the vehicle light not being part of the present invention;
Fig. 2a a schematic drawing of different exemplary embodiments of the vehicle light not being part of the present invention;
Fig. 2b a schematic drawing of different exemplary embodiments of the vehicle light of the present invention;
Fig. 2c a schematic drawing of different exemplary embodiments of the vehicle light not being part of the present invention; and
Fig. 3 a schematic drawing of a vehicle.

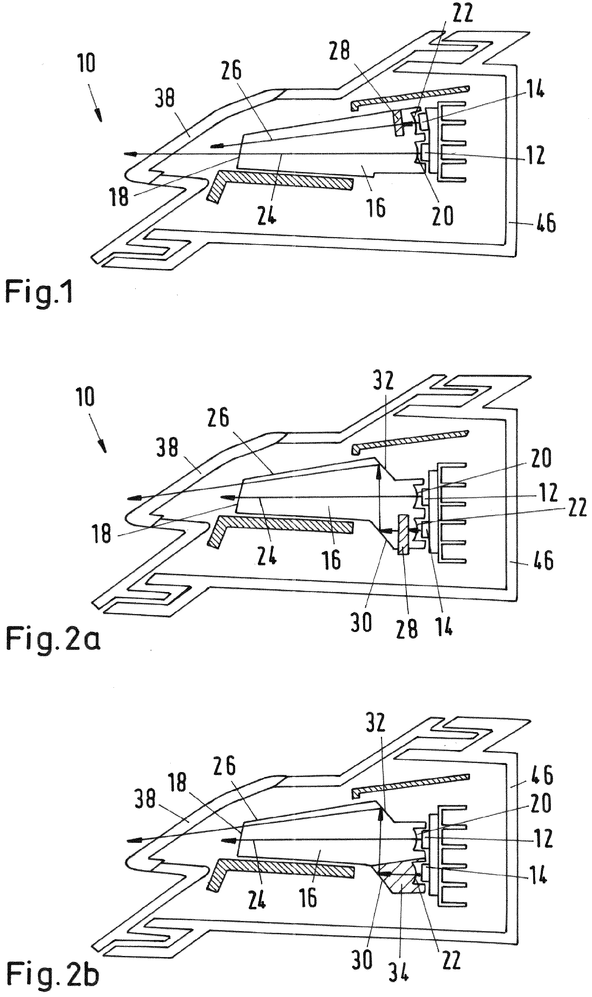

The entirety of the vehicle light according to Fig. 1 is referenced with reference sign 10.

The vehicle light 10 comprises a first light source 12, a second light source 14, at least one optical element 16, a first collimator surface 20 and a second collimator surface 22.

Furthermore, the vehicle light 10 may comprise a casing 46 with a transparent wall 38. The first light source 12, the second light source 14, the at least one optical element 16, the first collimator surface 20 and the second collimator surface 22 may be arranged in the casing 46. The light which the first and second light source 12, 14 emit may then exits the vehicle light 10 through the transparent wall 38. The casing 46 may be attached to a vehicle body.

The at least one optical element 16 comprises a light exit surface 18 that may face the transparent wall 38. In the example of Fig. 1 , the at least one optical element 16 further comprises the first collimator surface 20 and the second collimator surface 22. In another example (not shown), the first and second collimator surface 20, 22 are arranged on parts or a part being separate from the optical element 16.

The first light source 12 may emit white light. For example, the first light source 12 may be a white light emitting diode. Furthermore, the first light source 12 is arranged on the first collimator surface 20. At least a portion of the light from the first light source 12 radiates through the first collimator surface 20. The first collimator surface 20 collimates that light.

The collimated light comprises first light rays from the first light source 12 that follow the first optical path 24. An arrow indicates the direction of a single first light ray along the first optical path 24. For reasons of clarity, the optical paths of parallel first light rays are not shown in the figures.

The first optical path 24 extends from the first collimation surface 20 into the at least one optical element 16 and further to the light exit surface 18. Furthermore, the first optical path may extend from the light exit surface 18 through the transparent wall 38.

The second light source 14 may emit white light. For example, the second light source 14 may be a white light emitting diode. Furthermore, the second light source 14 is arranged on the second collimator surface 22. At least a portion of the light from the second light source 14 radiates through the second collimator surface 22. The second collimator surface 22 collimates that light.

The collimated light from the second light source 14 comprises second light rays that follow the second optical path 26. An arrow indicates the direction of a single second light ray along the second optical path 26. For reasons of clarity, the optical paths of parallel second light rays are not shown in the figures.

The second optical path 26 extends from the second collimation surface 22 into the at least one optical element 16 and further to the light exit surface 18. Furthermore, the second optical path may extend from the light exit surface 18 through the transparent wall 38.

In the example of Fig. 1 , the first and second optical paths 24, 26 extend from the first and second light source 12, 14 to the light exit surface 18, linearly.

In the example of Fig. 1 , a color filter 28 is arranged in the second optical path 26. The collimated light from the second light source 14 is radiated through the color filter 28. The color filter 28 changes the color of the white light. The color filter 28 may be an absorption filter or a dichro-itic filter. After passing the color filter 28, the second light rays have a different color than the first light rays.

The color filter 28 may be interchangeable. Thus, color filter 28 of a different color may be used such that the color of the second light rays at the light exit surface 18 may be changed during operation of the vehicle light 10.

Consequently, at the light exit surface, the second light rays comprise a different color than the first light rays.

Furthermore, at the light exit surface 18, the second optical path 26 overlaps with the first optical path 24. Consequently, the second light rays overlap with the first light rays at the light exit surface 18. Furthermore, the second light rays and first light rays may overlap at the transparent wall 38, too.

The overlap of the first and second optical paths 24, 26 results to a mixture of the first and second light rays if the first and second light source 12, 14 are switched on. The mixed light has a different color than the colors of the first and second light rays, then.

The first light source 12 and the second light source 14 may be operated, separately. Thus, the first light source 12 may emit light while the second light source 14 is switched off or the first light source 12 may be switched while the second light source 14 emits light. Of course, also both, the first and second light source 12, 14 may emit light at the same time.

According to Figs. 2a to 2c, the second light source 14 is arranged on another position than in the example of Fig. 1. The different arrangement may be required if the position of the second light source 14 in the example of Fig. 1 has spatial constraints.

In the examples of Figs. 2a to 2c, a double reflective element changes the radiation direction of the collimated light of the second light source 14. Thus, the second optical path 26 is not linear but has sharp bends. This allows a flexible arrangement of the second light source 14 and the corresponding second collimator surface 22.

The double reflective element may comprise two reflective surfaces 30, 32 which may be arranged in a in a periscope arrangement. The two reflective surfaces reflect the incoming second light rays towards another direction such that an arrangement of the second light source 14 in a view line of the light exit surface 18 is not required.

According to Fig. 2a, the second light source 14 may emit white light as in the example of Fig. 1. The collimated light of the second light source 14 may radiate through a color filter 28 as described in the example of Fig. 1.

Fig. 2b shows another example of the vehicle light 10 also having a second light source 14 that emits white light.

In that example, the optical element 16 comprises a colored portion 34 in the second optical path 26. The light from the second light source 14 that radiates through the second collimator surface 22 enters the colored portion 34. The colored portion 34 changes the color of the collimated light of the second light source 14. When leaving the colored portion 34, the second light rays have another color than the first light rays.

The colored portion 34 may comprise the second collimator surface 22. Thus, the light radiating from the second light source 14 through the collimator surface 22 may immediately enter the colored portion 34.

The colored portion 34 may be an integral portion of the optical element 16. Then, the optical element 16 may be manufactured with a bi-color mold injection process with which the optical element 16 is produced with the colored portion 34.

Alternatively, the colored portion 34 may be a part being separate from the optical element 16. The colored portion 34 may for example be an insert that is attachable to the optical element 16.

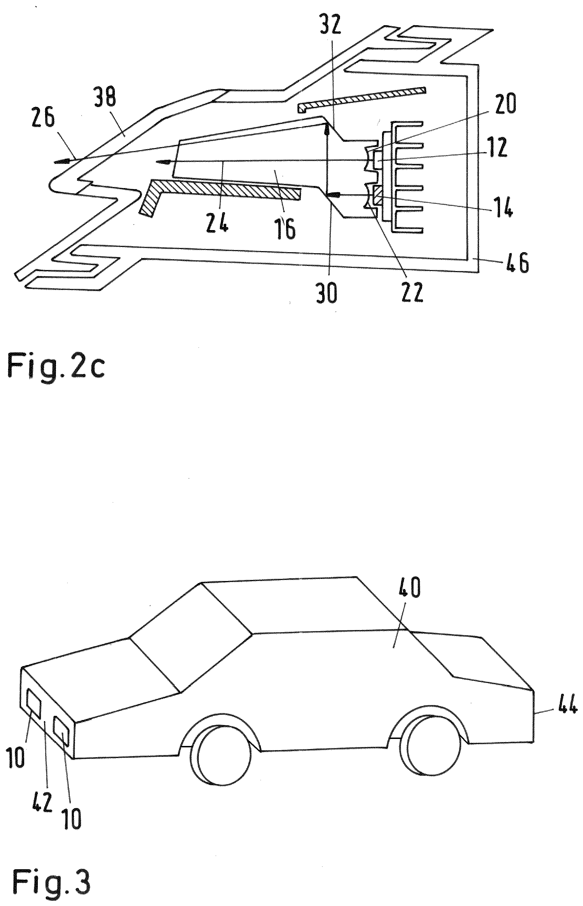

Fig. 2c shows another example of the vehicle light 10. In that example, the second light source 14 is configured to emit monochromatic light. The second light source 14 may for example be a colored light emitting diode.

In contrast to the examples of Figs. 1 , 2a and 2b, the example of Fig. 2c does not require a color filter 28 or a colored region 34 to provide second light rays that have a different color than the first light rays at the light exit surface 18.

Fig. 3 shows a schematic drawing of a vehicle 40. The vehicle 40 comprises a front end 42 and a rear end 44. Furthermore, the vehicle 40 comprises at least one vehicle light 10. In this example, two vehicle lights 10 are attached to the front end 42. Two further vehicle lights 10 may be attached to the rear end 44.

By operating the first light source 12 and the second light source 14 at the same time, the light being emitted from the vehicle lights 10 may have a color being different from that of the first and second light sources 12, 14. That light may be used to provide a welcome information for a driver or an acknowledgement information for commands of the driver, e.g. the locking or unlocking of the vehicle doors.

In the examples described above, the first light source 12 may also emit non-white light that has a different color than the second light rays at the light exit surface 18. Furthermore, the vehicle light 10 may comprise more than two light sources and collimator surfaces. The higher the number of light sources, the higher the number of mixed colors of the light rays at the light exit surface 8.

The invention is not limited to one of the aforementioned embodiments. It can be modified in many ways.

All features and advantages resulting from the claims, the description and the drawing, including constructive details, spatial arrangements and procedural steps, may be essential for the invention both in themselves and in various combinations.

## Claims

1. Vehicle light comprising a first light source (12), a second light source (14), at least one optical element (16) comprising a light exit surface (18), a first collimator surface (20) and a second collimator surface (22), wherein the first light source (12) is arranged on the first collimator surface (20) such that the first light source (12) emits first light rays through the first collimator surface (20), wherein a first optical path (24) of the first light rays extends from the first collimator surface (20) through the light exit surface (18), wherein the second light source (14) is arranged on the second collimator surface (22) such that the second light source (14) emits second light rays through the second collimator surface (22), **characterized in that** a second optical path (26) of the second light rays extends from the second collimator surface (22) through the light exit surface (18), wherein the second optical path (26) overlaps with the first optical path (24) at the light exit surface (18) and wherein, at the light exit surface (18), the second light rays have a different color than the first light rays; **characterized in that** the at least one optical element (16) further comprises at least one colored portion (34) being arranged in the second optical path (26) between the light exit surface (18) and the second collimator surface (22), and is configured to change the color of collimated light of the second light source (14); and the at least one colored portion (34) comprises the second collimator surface (22), so that the light radiating from the second light source (14) through the collimator surface (22) immediately enter the colored portion (34).

2. Vehicle light according to claim 1, **characterized in that** the at least one optical element (16) comprises a double reflective element being arranged in the second optical path (26).

3. Vehicle light according to claim 2, **characterized in that** the double reflective element comprises two reflective surfaces (30, 32) in a periscope arrangement.

4. Vehicle light according to one of claims 1 to 3, **characterized in that** the first light source (12) is configured to emit white light, wherein the first light source (12) preferably is a white light emitting diode.

5. Vehicle light according to one of claims 1 to 4, **characterized in that** the second light source (14) is configured to emit monochromatic light, wherein the second light source (14) preferably is a monochromatic light emitting diode.

6. Vehicle light according to one of claims 1 to 4, **characterized in that** the second light source (14) is configured to emit white light, wherein the second light source (14) preferably is a white light emitting diode.

7. Vehicle light according to one of claims 1 to 6, **characterized in that** the at least one colored portion (34) is a separate part being attached to the at least one optical element (16).

8. Vehicle light according to one of claims 1 to 6, **characterized in that** the at least one colored portion (34) is an inseparable part of to the at least one optical element (16).

9. Vehicle comprising at least one vehicle light (10) according to one of claims 1 to 8, a front end (42) and a rear end (44) wherein at least one vehicle light (10) is attached to the front end (42) and/or the rear end (44).

## Patentansprüche

1. Fahrzeugleuchte mit einer ersten Lichtquelle (12), einer zweiten Lichtquelle (14), mindestens einem optischen Element (16) mit einer Lichtaustrittsfläche (18), einer ersten Kollimatorfläche (20) und einer zweiten Kollimatorfläche (22), wobei die erste Lichtquelle (12) so auf der ersten Kollimatorfläche (20) angeordnet ist, dass die erste Lichtquelle (12) erste Lichtstrahlen durch die erste Kollimatorfläche (20) emittiert, wobei sich ein erster Strahlengang (24) der ersten Lichtstrahlen von der ersten Kollimatorfläche (20) aus erstreckt durch die Lichtaustrittsfläche (18), wobei die zweite Lichtquelle (14) so auf der zweiten Kollimatorfläche (22) angeordnet ist, dass die zweite Lichtquelle (14) zweite Lichtstrahlen durch die zweite Kollimatorfläche (22) emittiert, **dadurch gekennzeichnet, dass** sich ein zweiter Strahlengang (26) der zweiten Lichtstrahlen von der zweiten Kollimatorfläche (22) durch die Lichtaustrittsfläche (18) erstreckt, wobei sich der zweite Strahlengang (26) an der Lichtaustrittsfläche (18) mit dem ersten Strahlengang (24) überlappt und wobei sich an der Lichtaustrittsfläche (18), die zweiten Lichtstrahlen eine andere Farbe als die ersten Lichtstrahlen aufweisen; **dadurch gekennzeichnet, dass** das mindestens eine optische Element (16) ferner mindestens einen farbigen Abschnitt (34) umfasst, der in dem zweiten optischen Pfad (26) zwischen der Lichtaustrittsfläche (18) und der zweiten Kollimatorfläche (22) angeordnet ist und dazu konfiguriert ist, die Farbe des kollimierten Lichts der zweiten Lichtquelle (14) zu ändern; und der mindestens eine farbige Abschnitt (34) die zweite Kollimatorfläche (22) umfasst, so dass das Licht, das von der zweiten Lichtquelle (14) durch die Kollimatorfläche (22) strahlt, sofort in den farbigen Abschnitt (34) eintritt.

2. Fahrzeugleuchte nach Anspruch 1, **dadurch gekennzeichnet, dass** das mindestens ein optisches Element (16) ein doppelt reflektierendes Element umfasst, das in dem zweiten optischen Pfad (26) angeordnet ist.

3. Fahrzeugleuchte nach Anspruch 2, **dadurch gekennzeichnet, dass** das doppelreflektierende Element zwei reflektierende Flächen (30, 32) in einer Periskopanordnung umfasst.

4. Fahrzeugleuchte nach einem der Ansprüche 1 bis 3, **dadurch gekennzeichnet, dass** die erste Lichtquelle (12) so konfiguriert ist, dass sie weißes Licht emittiert, wobei die erste Lichtquelle (12) vorzugsweise eine Weißlicht emittierende Diode ist.

5. Fahrzeugleuchte nach einem der Ansprüche 1 bis 4, **dadurch gekennzeichnet, dass** die zweite Lichtquelle (14) zur Emission von monochromatischem Licht ausgebildet ist, wobei die zweite Lichtquelle (14) vorzugsweise eine monochromatische Leuchtdiode ist.

6. Fahrzeugleuchte nach einem der Ansprüche 1 bis 4, **dadurch gekennzeichnet, dass** die zweite Lichtquelle (14) zur Abgabe von weißem Licht ausgebildet ist, wobei die zweite Lichtquelle (14) vorzugsweise eine Weißlicht emittierende Diode ist.

7. Fahrzeugleuchte nach einem der Ansprüche 1 bis 6, **dadurch gekennzeichnet, dass** der mindestens einen farbigen Abschnitt (34) ein separates Teil ist, das an dem mindestens ein optisches Element (16) angebracht ist.

8. Fahrzeugleuchte nach einem der Ansprüche 1 bis 6, **dadurch gekennzeichnet, dass** der mindestens einen farbigen Abschnitt (34) ein untrennbarer Teil des mindestens eines optischen Elements (16) ist.

9. Fahrzeug, umfassend mindestens eine Fahrzeugleuchte (10) nach einem der Ansprüche 1 bis 8, ein vorderes Ende (42) und ein hinteres Ende (44), wobei mindestens eine Fahrzeugleuchte (10) an dem vorderen Ende (42) und/oder dem hinteren Ende (44) angebracht ist.

## Revendications

1. Éclairage de véhicule comprenant une première source de lumière (12), une deuxième source de lumière (14), au moins un élément optique (16) comprenant une surface de sortie de lumière (18), une première surface de collimateur (20) et une deuxième surface de collimateur (22), la première source de lumière (12) étant agencée sur la première surface de collimateur (20) de telle sorte que la première source de lumière (12) émet des premiers rayons lumineux à travers la première surface de collimateur (20), un premier chemin optique (24) des premiers rayons lumineux s'étendant à partir de la première surface de collimateur (20) à travers la surface de sortie de lumière (18), la deuxième source de lumière (14) étant agencée sur la deuxième surface de collimateur (22) de telle sorte que la deuxième source de lumière (14) émet des deuxièmes rayons lumineux à travers la deuxième surface de collimateur (22), **caractérisé en ce qu'**un deuxième chemin optique (26) des deuxièmes rayons lumineux s'étend à partir de la deuxième surface de collimateur (22) à travers la surface de sortie de lumière (18), le deuxième chemin optique (26) chevauchant le premier chemin optique (24) au niveau de la surface de sortie de lumière (18), et au niveau de la surface de sortie de lumière (18), les seconds rayons lumineux ayant une couleur différente de celle des premiers rayons lumineux ; **caractérisé en ce que** l'au moins un élément optique (16) comprend en outre au moins une partie colorée (34) agencée dans le second chemin optique (26) entre la surface de sortie de lumière (18) et la deuxième surface de collimateur (22), et est configuré pour changer la couleur de la lumière collimatée de la deuxième source de lumière (14) ; et l'au moins une partie colorée (34) comprend la deuxième surface de collimateur (22), de sorte que la lumière rayonnant de la deuxième source de lumière (14) à travers la surface de collimateur (22) pénètre immédiatement dans la partie colorée (34).

2. Éclairage de véhicule selon la revendication 1, **caractérisé en ce que** l'au moins un élément optique (16) comprend un élément à double réflexion disposé dans le second chemin optique (26).

3. Éclairage de véhicule selon la revendication 2, **caractérisé en ce que** l'élément à double réflexion comprend deux surfaces réfléchissantes (30, 32) dans un agencement périscope.

4. Éclairage de véhicule selon l'une des revendications 1 à 3, **caractérisé en ce que** la première source de lumière (12) est configurée pour émettre de la lumière blanche, la première source de lumière (12) étant de préférence une diode électroluminescente blanche.

5. Éclairage de véhicule selon l'une des revendications 1 à 4, **caractérisé en ce que** la deuxième source de lumière (14) est configurée pour émettre une lumière monochromatique, la deuxième source de lumière (14) étant de préférence une diode électroluminescente monochromatique.

6. Éclairage de véhicule selon l'une des revendications 1 à 4, **caractérisé en ce que** la deuxième source de lumière (14) est configurée pour émettre une lumière blanche, la deuxième source de lumière (14) étant de préférence une diode électroluminescente blanche.

7. Éclairage de véhicule selon l'une des revendications 1 à 6, **caractérisé en ce que** l'au moins une partie colorée (34) est une partie séparée qui est fixée à l'au moins un élément optique (16).

8. Éclairage de véhicule selon l'une des revendications 1 à 6, **caractérisé en ce que** l'au moins une partie colorée (34) est une partie inséparable de l'au moins un élément optique (16).

9. Véhicule comprenant au moins un éclairage de véhicule (10) selon l'une des revendications 1 à 8, une extrémité avant (42) et une extrémité arrière (44), au moins un éclairage de véhicule (10) étant fixé à l'extrémité avant (42) et/ou à l'extrémité arrière (44).
